# EUROPEAN PATENT SPECIFICATION

(11) **EP 4 602 891 B1**
(45) Date of publication and mention of the grant of the patent: **23.09.2026**
(21) Application number: 23783819.8
(22) Date of filing: 03.10.2023
(51) Int. Cl.: H05B 45/10, H05B 45/46, H05B 45/20

(54) **CAPACITIVE TOUCH BASED LIGHTING CONTROL**
KAPAZITIVE BERÜHRUNGSBASIERTE BELEUCHTUNGSSTEUERUNG
COMMANDE D'ÉCLAIRAGE TACTILE CAPACITIVE

(30) Priority: 10.10.2022 US 202263414759 P; 20.10.2022 EP 22202648
(43) Date of publication of application: 20.08.2025
(73) Proprietor: Signify Holding B.V., 5656 AE Eindhoven (NL)
(72) Inventor: VIDAKOVIC, Voya, 5656 AE Eindhoven (NL); MARANDI, Amir, 5656 AE Eindhoven (NL); CHO, Nam, Chin, 5656 AE Eindhoven (NL); JANIK, Raymond, George, 5656 AE Eindhoven (NL)
(74) Representative: Verweij, Petronella Daniëlle
(86) International application number: PCT/EP2023/077306
(87) International publication number: WO 2024/078916

(56) References cited:
- EP-A2- 2 858 457
- US-A1- 2021 064 178
- US-A1- 2022 003 397

## Description

### TECHNICAL FIELD

The present disclosure relates generally to lighting solutions, and more particularly to controlling correlated color temperature (CCT) and brightness level of a light provided by a lighting device based on user inputs provided to the lighting device as capacitive touches of a capacitive touch trim element of the lighting device.

### BACKGROUND

Some lighting fixtures may be controllable to change characteristics (e.g., dim level, correlated color temperature (CCT), etc.) of the light emitted by the lighting fixtures. For example, some light fixtures may be wired to a control unit (e.g., a wall unit) that may be used to adjust dim level and/or CCT of the lights provided by the light fixtures. As another example, some light fixtures may be wirelessly controlled to adjust dim level and/or CCT of the lights provided by the light fixtures. As yet another example, some light fixtures may include a configuration interface, such as a dipswitch, can be used to set the dim level and/or CCT of the lights provided by the light fixtures. In some cases, implementing these methods of controlling a light fixture may be undesirable, for example, because of installation challenges, expense, and/or limited accessibility for adjustments. Document US2022/003397Al discloses a recessed lighting device wherein the switch assembly may include a capacitive switch for adjusting a colour of the emitted light and a trim must be removed from the luminaire in order to access the underlying switch assembly. Thus, a solution that enables a relatively convenient way of adjusting the characteristics of a light provided by an installed light fixture without uninstalling the light fixture and without removing a component of the light fixture may be desirable.

### SUMMARY

The present disclosure relates to lighting solutions, and more particularly to controlling CCT, color, and/or brightness level of a light provided by a lighting device based on user inputs provided to the lighting device as capacitive touches of a capacitive touch trim element of the lighting device. In an example embodiment, a recessed lighting device includes a light module configured to emit a light and a touch sensitive interface unit that includes a capacitive touch trim element. The lighting device further includes a controller configured to change a correlated color temperature (CCT) of the light from a first CCT value to a second CCT value based on one or more capacitive touches of the capacitive touch trim element by a user. After the recessed lighting device is installed in a ceiling, the capacitive touch trim element is exposed to view and accessible to touch from below the ceiling, where the one or more capacitive touches is detectable along a surface of the capacitive touch trim element from below the ceiling after install without removing a component of the lighting device.

In another example embodiment, a method of controlling a CCT of a light emitted by a recessed lighting device includes controlling, by a controller, a light module of the recessed lighting device to emit the light. The method further includes receiving, by the controller, one or more user inputs provided as one or more capacitive touches of a capacitive touch trim element. The method also includes adjusting, by the controller, the CCT of the light from a first CCT value to a second CCT value based on the one or more capacitive touches, where, after the recessed lighting device is installed in a ceiling, the capacitive touch trim element is exposed to view and accessible to touch from below the ceiling, where the one or more capacitive touches is detectable along a surface of the capacitive touch trim element from below the ceiling after install without removing a component of the lighting device.

These and other aspects, objects, features, and embodiments will be apparent from the following description and the appended claims.

### BRIEF DESCRIPTION OF THE FIGURES

Reference will now be made to the accompanying drawings, which are not necessarily drawn to scale, and wherein:
FIG. 1 illustrates a lighting device that provides a light having a correlated color temperature (CCT) that is controllable based on user inputs provided as capacitive touches according to an example embodiment.
FIG. 2 illustrates details of the lighting device of FIG. 1 according to an example embodiment;
FIGS. 3A and 3B illustrate lighting control signals used to control the CCT of the light provided the lighting device of FIG. 1 according to example embodiments;
FIG. 4 illustrates a lighting system including the lighting device of FIG. 1 according to an example embodiment;
FIG. 5 illustrates a light fixture corresponding to the lighting device of FIG. 1 according to an example embodiment;
FIG. 6 illustrates a light fixture corresponding to the lighting device of FIG. 1 according to another example embodiment;
FIG. 7 illustrates a method of controlling the CCT of the light provided by the lighting device of FIG. 1 according to an example embodiment;
FIG. 8 illustrates a method of controlling the CCT and the brightness level of the light provided by the lighting device of FIG. 1 according to an example embodiment.
FIG. 9 illustrates a light fixture corresponding to a lighting device according to another example embodiment with a remotely located controller and driver;
FIG. 10 illustrates a second view of the example embodiment of FIG. 9; and
FIG. 11 illustrates an exploded view of the lighting device according to the example embodiment of Fig. 9.

The drawings illustrate only example embodiments and are therefore not to be considered limiting in scope. The elements and features shown in the drawings are not necessarily to scale, emphasis instead being placed upon clearly illustrating the principles of the example embodiments. Additionally, certain dimensions or placements may be exaggerated to help visually convey such principles. In the drawings, the same reference numerals used in different figures may designate like or corresponding but not necessarily identical elements.

### DETAILED DESCRIPTION OF THE EXAMPLE EMBODIMENTS

In the following paragraphs, example embodiments will be described in further detail with reference to the figures. In the description, well known components, methods, and/or processing techniques are omitted or briefly described. Furthermore, reference to various feature(s) of the embodiments is not to suggest that all embodiments must include the referenced feature(s).

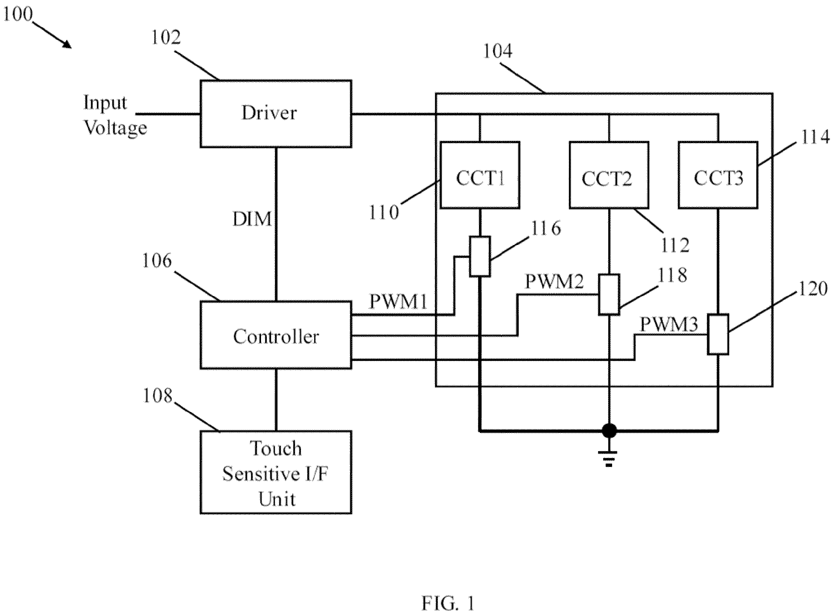

FIG. 1 illustrates a lighting device 100 that provides a light having a correlated color temperature (CCT) that is controllable based on user inputs provided as capacitive touches according to an example embodiment. In some example embodiments, the lighting device 100 may be a surface mount light fixture or a recessed light fixture. For example, the lighting device 100 may be mounted to or recessed in a ceiling or a wall. In some alternative embodiments of the invention, the lighting device 100 may be suspended from a joist, ceiling, or wall. The lighting device 100 may include a driver 102, a light module 104, a controller 106, and a touch sensitive interface unit 108. The controller 106 may be coupled to the driver 102, the light module 104, and the touch sensitive interface unit 108. The driver 102 may provide power to the light module 104, and the light module 104 may emit the light provided by the lighting device 100. For example, the driver 102 may be a current source driver that receives alternative-current (AC) power via Input Voltage connection and provides direct-current (DC) power compatible with light emitting diode (LED) light sources.

In some example embodiments, the light module 104 may include LED light sources 110, 112, 114. The LED light source 110 may emit a light having a CCT value, CCT1. For example, CCT1 may be a warm CCT. The LED light source 112 may emit a light having a CCT value, CCT2. The LED light source 114 may emit a light having a CCT value, CCT3. For example, CC3 may be a cool CCT, and CCT2 may be between CCT1 and CCT3. CCT1 may be 3000K, CCT2 may be 4000K, and CCT3 may be 5000K. As another example, CCT1 may be 3000K or below, CCT2 may be in a range of 4000K-5000K, and CCT3 may be 6000K or above. In general, the lights emitted by the LED light sources 110, 112, 114, individually or in a combination of two or more of the lights, may be in the light provided by the light module 104 having a desired CCT. The description herein regarding changing the CCT of the light emitted by the light fixture to have a different CCT in response to detecting certain capacitance changes of the trim element (or alternatively end caps of a fixture) may also be applied to changing the light color emitted by the light module, where the light module contains two or more light sources of different colors, rather than different CCTs as described throughout this detailed description.

In some example embodiments, the controller 106 may be or may include a microprocessor or a microcontroller that executes software code stored in a memory device. For example, the controller 106 may include a memory device (e.g., a flash memory and/or EPROM) that is used to store software code and data, and a microcontroller of the controller 106 may execute the stored software code and data to perform operations described herein with respect to the controller 106.

In some example embodiments, the controller 106 may control the light provided by the light module 104 by controlling the amount of current that the driver 102 provides to the light module 104. For example, the controller 106 may provide a dim level control signal, DIM, (e.g., a 0-10v signal) to the driver 102 to control the current provided to the light module 104. The controller 106 may control the dim level/brightness level of the light provided by the light module 104, for example, based on a default setting, user inputs, etc.

In some example embodiments, the light module 104 may include transistors 116, 118, 120 that operate as switches to control the current amount through the LED light sources 110, 112, 114. To illustrate, the transistor 116 may be coupled to the LED light source 110, and the controller 106 may control (e.g., turn on and off) the transistor 116 to control the amount of current flowing through the LED light source 110. The transistor 118 may be coupled to the LED light source 112, and the controller 106 may control (e.g., turn on and off) the transistor 118 to control the amount of current flowing through the LED light source 112. The transistor 120 may be coupled to the LED light source 114, and the controller 106 may control (e.g., turn on and off) the transistor 120 to control the amount of current flowing through the LED light source 114.

In some example embodiments, because the CCT of the light provided by the light module 104 may depend on the CCT values, CCT1, CCT2, CCT3, of the lights provided by the LED light sources 110, 112, 114, the CCT of the light may be adjusted by controlling the intensity of the light provided by one or more of the LED light sources 110, 112, 114. Because the intensity of the lights provided by the LED light sources 110, 112, 114 depends on the amount of current flowing through each one of the LED light sources 110, 112, 114, the controller 106 may adjust the CCT of the light provided by the light module 104 by controlling the current flow through each one of the LED light sources 110, 112, 114.

In some example embodiments, the controller 106 may provide lighting control signals that are pulse width modulation (PWM) signals, PWM1, PWM2, and PWM3, to the transistors 116, 118, and 120, respectively, to control the flow of current through each one of the LED light sources 110, 112, 114. To illustrate, the controller 106 may change the duty cycle of each of the PWM signals PWM1, PWM2, PWM3 to change the flow of current through each one of the LED light sources 110, 112, 114. For example, the controller 106 may be coupled to the transistor 116 and may provide the PWM signal, PWM1, to the transistor 116. The transistor 116 may be a MOSFET transistor, and the signal PWM1 may be provided to the gate terminal of the transistor 116. The controller 106 may be coupled to the transistor 118 and may provide the PWM signal, PWM2, to the transistor 118. For example, the transistor 118 may be a MOSFET transistor, and the signal PWM2 may be provided to the gate terminal of the transistor 118. The controller 106 may be coupled to the transistor 120 and may provide the PWM signal, PWM3, to the transistor 120. For example, the transistor 120 may be a MOSFET transistor, and the signal PWM3 may be provided to the gate terminal of the transistor 118. Because the controller 106 can control current flow through the LED light sources 110, 112, 114 individually using the PWM signals PWM1, PWM2, PWM3, the controller 106 can adjust the CCT of the light provided by the light module 104 by controlling the intensity of the light provided by each one of the LED light sources 110, 112, 114.

In some example embodiments, the touch sensitive interface unit 108 includes a capacitive touch trim element. For example, the lighting device 100 may be a recessed light fixture or a surface mount light fixture. A user may provide user inputs to the lighting device 100 by touching a capacitive touch trim element (e.g., a trim ring of a trim) of the lighting device 100, and the controller 106 may control the CCT of the light provided by the lighting device 100 based on the touches of the capacitive touch trim element by the user. In some alternative embodiments, the capacitive touch trim element may be a flange of a housing or an endcap. In general, after the lighting device 100 is installed recessed in a ceiling or a wall, the capacitive touch trim element is accessible to touch by a user without uninstalling the lighting device 100 and without removing a component of the lighting device 100. For example, after the lighting device 100 is installed recessed in a ceiling, a user can provide user inputs to the lighting device 100 by touching the capacitive touch trim element of the lighting device 100 using a hand or a capacitive device to provide user inputs to change the CCT of the light provided by the lighting device 100. To illustrate, a capacitive switch and/or the controller 106 coupled to the capacitive touch trim element may detect one or more capacitive touches by the user and interpret the one or more touches as user inputs. For example, a capacitive switch or the controller 106 may detect capacitance changes resulting from a user touching the capacitive touch trim element and interpret the capacitance changes as particular user inputs. The controller 106 may interpret capacitive touches as particular user inputs based on, for example, the durations of the capacitive touches, the interval between capacitive touches, the pattern of a swipe or drag of the fixture across the surface of the capacitive touch trim element, the number of fingers (or size of the engaged surface area) of the capacitive touch trim element, etc.

In some example embodiments, the controller 106 may change the CCT of the light provided by the lighting device 100 to a CCT value (e.g., CCT1 or CCT2) based on a capacitive touch of the capacitive touch trim element of the lighting device 100 that has a duration of less than a threshold time period. The threshold time period may be 1 second. In response to the user touching the capacitive touch trim element of the lighting device 100, the controller 106 may change the brightness level of the light to less than a threshold level (e.g., 20 lumens, 50 lumens, or 100 lumens) before or after changing the CCT of the light. For example, reducing the brightness level of the light may reduce the glare on the user assessing the CCT of the light.

In some example embodiments, the controller 106 may continuously change the CCT of the light in steps based on a capacitive touch that has a duration longer than a threshold time period. For example, the threshold time period may be 1 second, 2 seconds, etc. When a user touches the capacitive touch trim element for the threshold time period, the controller 106 may start changing the CCT of the light right after the threshold time and stop changing the CCT of the light when the capacitive touch stops. To illustrate, after the threshold time, the controller 106 may change the CCT of the light to CCT1 in a first step, to CCT2 in a second step, and to CCT3 in a third step, while the user is touching the capacitive touch trim element. As another example, after the threshold time, the controller 106 may change the CCT of the light to CCT1 in a first step, to CCT2 in a second step, to CCT3 in a third step, and back to CCT1 in a fourth step while the user is touching the capacitive touch trim element. The controller 106 may maintain the CCT for a wait time period (e.g., 5 seconds, 10 seconds, 15 seconds, 30 seconds, etc.) after each CCT change to allow the user adequate time to assess the light. In response to the user touching the capacitive touch trim element of the lighting device 100 for the threshold time period, the controller 106 may change the brightness level of the light to less than a threshold level (e.g., 20 lumens, 50 lumens, 100 lumens, etc.). For example, reducing the brightness level of the light may reduce the glare on the user assessing the CCT of the light.

In some example embodiments, the controller 106 may change both the CCT and the brightness level of the light based on a capacitive touch of the capacitive touch trim element of the lighting device 100. For example, in response to a capacitive touch that has a duration of less than a threshold time period (e.g., 1 second), the controller 106 may change the CCT of the light to a CCT value (e.g., CCT1 or CCT2) and change the brightness level of the light such that the light has particular lumens associated with the CCT value. As another example, two capacitive touches with a threshold time period (e.g., 1 second) correspond to a user input indicating simultaneous CCT and brightness level change. To illustrate, the controller 106 may control the current provided to the light module 104 such that the light provided by the light module 104 has first particular lumens (e.g., 1000 lumens) when the CCT of the light is CCT1, second particular lumens (e.g., 2000 lumens) when the CCT of the light is CCT2, etc. As described above, the controller 106 may adjust the current provided to the light module 104 using the dim level control signal DIM to adjust the brightness level of the light provided by the light module 104.

In some example embodiments, the controller 106 may not adjust the CCT of the light provided by the lighting device 100 based on capacitive touches unless the controller 106 is in an adjustment mode. To illustrate, when the controller 106 is not in the adjustment mode, the controller 106 may be locked (i.e., not configurable) and may not use capacitive touches as user inputs to adjust the CCT of the light and avoid "false positives" of other objects or inadvertent touching of the trim element or housing of the lighting device 100 or handling of the trim element or housing where CCT or intensity adjustment of the light module 104 is not desired. When the controller 106 may be locked, the controller 106 may also not adjust brightness level of the light along with the CCT of the light.

In some example embodiments, the controller 106 may enter the adjustment mode in response to one or more capacitive touches of the capacitive touch trim element of the lighting device 100. For example, when the controller 106 is locked, a user may touch (i.e., touch and hold) the capacitive touch trim element of the lighting device 100 for a time duration (e.g., 1, second or 2 seconds), and the controller 106 may enter the adjustment mode in response to the particular capacitive touch. Upon entering the adjustment mode, the controller 106 may change the CCT of the light provided by the light module 104 to a default CCT value (e.g., CCT1). Upon entering the adjustment mode, the controller 106 may also change the brightness level of the light to default lumens (e.g., 50 lumens or 1000 lumens). Alternatively, upon entering the adjustment mode, the controller 106 may keep the CCT and/or the brightness level unchanged until additional capacitive touches of the capacitive touch trim element are detected. In some example embodiments, if no capacitive touches of the capacitive touch trim element are detected for a timeout period (e.g., 30 seconds or one minute) after the controller 106 enters the adjustment mode or after the last capacitive touch, the controller 106 may exit the adjustment mode. The controller 106 may reenter the adjustment mode in response to the particular capacitive touch corresponding to entry into the adjustment mode.

In some example embodiments, the controller 106 may toggle between a CCT adjustment mode and a brightness adjustment mode in response to a touch that lasts longer than a threshold time period (e.g., 1 second). After entering each mode, a fast double touch (e.g., two touches within 1 second) followed by a touch for longer than a threshold time (e.g., 1 second) may cause the CCT or the brightness of the light to increase depending on the particular mode. After entering each mode, a single fast touch (e.g., a touch lasting a half second) followed by a touch that lasts longer than a threshold time period (e.g., 1 second) may cause the CCT or the brightness of the light to decrease depending on the particular mode. After a timeout period, the controller 106 may exit the CCT adjustment mode/the brightness adjustment mode, or in other alternative embodiments the controller 106 may exit the adjustment mode by receiving certain touch patterns or sequences detected by the controller 106 indicating the adjustment is complete or canceled. In a further alternative embodiment, power cycling the controller 106 (and/or driver) may also exit the adjustment mode.

In some alternative embodiments, the same touch sequences or patterns described herein that would be detected by the controller 106 as entering or existing an adjustment mode, may be used to provide a status indication (a "status mode") of some functional aspect, component, or accessory associated with the lighting device such as a daylight sensor, occupancy sensor, camera, emergency battery, the power supply/driver, transceiver connection, or other features or functionality. As an example, the controller may detect a sequence of taps of the capacitive trim element to enter a status mode, where the controller may then cause the lights to either flash or change CCT or color to indicate the status of a battery backup associated with the lighting device (i.e., the light source flashes or turns green to indicate the current charge of the backup battery associated with the light fixture. As another example, the controller may detect a sequence of taps of the capacitive trim element to enter a status mode, where the controller may then cause the lights to either flash or change CCT or color to indicate the status of a transceiver (wireless connection) associated with the lighting device (i.e., the light source flashes or turns green to indicate the status of the wireless connection of the lighting device. In some embodiments implementing the "status mode" functionality, the controller may also cause a status indication of the function, component, or accessory associated with the lighting device to be transmitted to a remote device either via wired or wireless connection via a transmitter (i.e. wireless transceiver).

By using the touch sensitive interface unit 108 to receive user inputs as capacitive touches, the CCT of the light provided by the lighting device 100 may be adjusted after the lighting device 100 is installed without the need to uninstall the lighting device 100. By using the touch sensitive interface unit 108 to receive user inputs as capacitive touches, the CCT of the light provided by the lighting device 100 may adjusted be without the need for wiring to a wall unit and without a wall unit that has a CCT user input interface. The use of capacitive touches to adjust the CCT of the light provided by the lighting device 100 enables CCT adjustments during and after the installation of the lighting device 100.

In some alternative embodiments, the light module 104 may include more or fewer than three light sources without departing from the scope of this disclosure. For example, if the light module 104 includes more than three light sources that emit lights having different CCTs from each other, the light module 104 may include more than three transistors, and the controller 106 may provide more than three light control signals to the light module 104. In some alternative embodiments, the driver 102 may provide current to the LED light sources 110, 112, 114 over separate channels without departing from the scope of this disclosure. In some alternative embodiments, the transistors 116, 118, 120 may be connected to the respective ones of the LED light sources 110, 112, 114 in a different configuration than shown without departing from the scope of this disclosure. In some alternative embodiments, the lighting device 100 may include other components than shown without departing from the scope of this disclosure. In some alternative embodiments, different capacitive touch patterns (e.g., touching twice within a time period (e.g., 1 second), different time durations, multiple quick taps, or sliding a finger around a portion or all of the perimeter of the trim, or swiping one finger or multiple fingers at the same time, or similar and distinguishable patterns that are detectable and/or distinguishable by the controller) than described above may be provided as user inputs without departing from the scope of this disclosure.

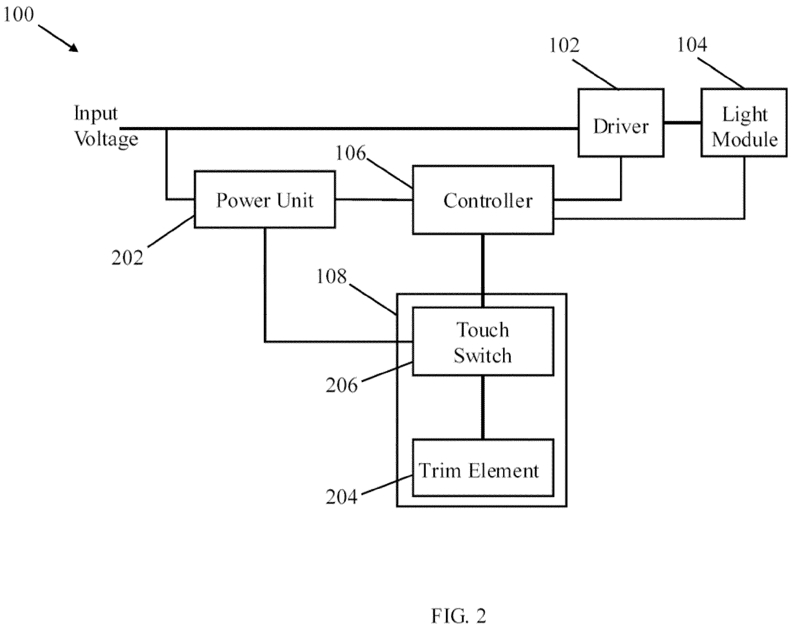

FIG. 2 illustrates details of the lighting device of FIG. 1 according to an example embodiment. Referring to FIGS. 1 and 2, in some example embodiments, the lighting device 100 includes a power unit 202, the driver 102, the light module 104, the controller 106, and the touch sensitive interface unit 108. The power unit 202 may receive the AC power via the Input Voltage connection and provide to the controller 106 DC power at an appropriate voltage (e.g., 12V). For example, the power unit 202 may include one or more voltage regulators.

In some example embodiments, the touch sensitive interface unit 108 may include a capacitive touch trim element 204 of the lighting device 100 and a touch switch 206 that is electrically connected to (though may or may not be mechanically connected or in physical proximity to) the capacitive touch trim element 204. For example, the touch switch 206 may be connected to the capacitive touch trim element 204 by one or more electrical wires that may be, for example, attached by one or more screws. In some alternative embodiments, the touch sensitive interface unit may include the capacitive touch trim element but no touch switch. Instead, the touch switch may be remote from the lighting device, or the touch switch may be functionality incorporated into the controller and/or the driver of the lighting device. The capacitive touch trim element 204 may be made from and/or may include an electrically conductive material (e.g., metal, etc.). The touch switch 206 may sense capacitive touches of the capacitive touch trim element 204 and provide a capacitive sense signal to the controller 106. To illustrate, the power unit 202 may provide a voltage to the touch sensitive interface unit 108 that enables the touch sensitive interface unit 108 to sense capacitive touches and to provide the capacitive sense signal to the controller 106.

In some example embodiments, the lighting device 100 may be a recessed light fixture or a surface mount light fixture, and the capacitive touch trim element 204 may include an opening through which light from the light module 104 passes to illuminate a space below. For example, the capacitive touch trim element 204 may be at least partially positioned below a ceiling such that the capacitive touch trim element 204 is viewable and accessible for touching by a user from below after the lighting device 100 installed (i.e., recessed or surface mounted) and without removing a component of the lighting device 100. For example, the capacitive touch trim element 204 may be a trim ring of a trim of the light device 100 or an integrally formed trim ring of a housing of the lighting device 100 that is exposed to view and touch from below the lighting device 100.

In some alternative embodiments, the functions of the touch switch 206 and the controller 106 may be integrated into a single device without departing from the scope of this disclosure. In some alternative embodiments, separate power units may provide power to the different components of the lighting device 100 without departing from the scope of this disclosure.

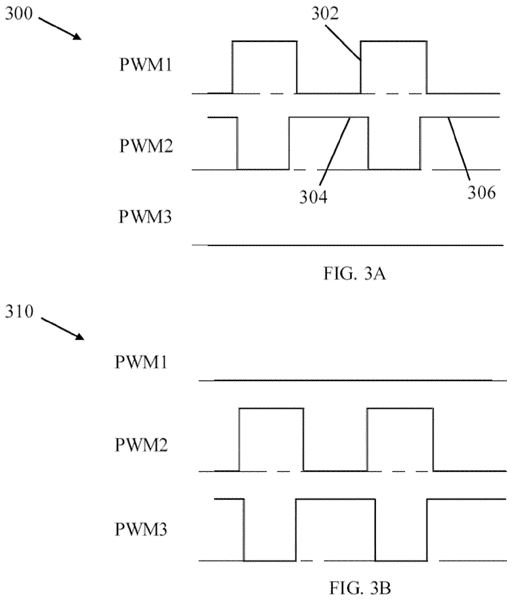

FIGS. 3A and 3B illustrate waveforms 300, 310 of the lighting control signals used to control the CCT of the light provided the lighting device 100 of FIG. 1 according to example embodiments. Referring to FIGS. 1-3B, in some example embodiments, the controller 106 adjusts the pulse widths/duty cycles of the PWM signals PWM1, PWM2, and PWM3 to control the intensity of the lights provided by the LED light sources 110, 112, and 114, respectively. For example, the controller 106 may set the duty cycle of the PWM signal PWM3, which is used to control the intensity of the light provided by the LED light source 114 and which has the CCT value CCT3, to 0% as shown in FIG. 3A. In FIG. 3A, the duty cycles of the PWM signals PWM1, PWM2, which are used to control the intensities of the lights provided by the LED light source 110, 112, are non-zero, and the light provided by the light module 104 is a combination of the lights provided by the LED light sources 110, 112, which have CCT values CCT1 and CCT2. Because the intensities of the lights provided by the LED light sources 110, 112 depend on the duty cycle of each one of the PWM signals PWM1, PWM2, the CCT of the light provided by the light module 104 depends on the duty cycles of the PWM signals PWM1, PWM2. To illustrate, the CCT value of the light provided by the light module 104 may be between CCT1 and CCT2 and may be closer to CCT2 than to CCT1 because the duty cycle of the PWM signal PWM2 is greater than the duty cycle of the PWM signal PWM1.

In some example embodiments, the controller 106 may set the duty cycle of the PWM signal PWM1, which is used to control the intensity of the light provided by the LED light source 110 and which has the CCT value CCT1, to 0% as shown in FIG. 3B. In FIG. 3B, the duty cycles of the PWM signals PWM2, PWM3, which are used to control the intensities of the lights provided by the LED light source 112, 114, are non-zero, and the light provided by the light module 104 is a combination of the lights provided by the LED light sources 112, 114, which have CCT values CCT2 and CCT3. Because the intensities of the lights provided by the LED light sources 112, 114 depend on the duty cycle of each one of the PWM signals PWM2, PWM3, the CCT of the light provided by the light module 104 depends on the duty cycles of the PWM signals PWM2, PWM3. To illustrate, the CCT value of the light provided by the light module 104 may be between CCT2 and CCT3 and may be closer to CCT3 than to CCT2 because the duty cycle of the PWM signal PWM3 is greater than the duty cycle of the PWM signal PWM2.

In some example embodiments, to avoid exposing the driver 102 to an open-circuit load, the pulses of at least two of the PWM signals PWM1, PWM2, PWM3 may overlap with each other. To illustrate with respect to FIG. 3A, a pulse 302 of the PWM signal PWM1 partially overlaps with the pulse 304 of the PWM signal PWM2, where the rising edge of the pulse 302 of the PWM signal PWM1 occurs before the falling edge of the pulse 304 of the PWM signal PWM2. As another example, the pulse 302 of the PWM signal PWM1 partially overlaps with the pulse 306 of the PWM signal PWM2, where the rising edge of the pulse 306 of the PWM signal PWM2 occurs before the falling edge of the pulse 302 of the PWM signal PWM1.

In some example embodiments, two of the PWM signals PWM1, PWM2, PWM3 may have a duty cycle of 0% without departing from the scope of this disclosure. For example, Table 1 below shows duty cycles of the PWM signals PWM1, PWM2, PWM3 with respect to associated CCT values CCT1, CCT2, CCT3 of the lights emitted by the LED light sources 110, 112, 114. For example, as shown in row 1 of Table 1, the duty cycle of the PWM signal PWM1 may be 100%, and the duty cycles of the PWM signals PWM2, PWM3 may be 0%, where the light provided by the light module 104 and thus by the lighting device 100 is the light emitted by the LED light source 110 and has the CCT value CCT1. To illustrate, the controller 106 may set the duty cycles of the PWM signals PWM1, PWM2, PWM3 as shown in row 1 of Table 1 in response to a capacitive touch of the capacitive touch trim element 204 of the lighting device 100. The capacitive touch trim element 204 may be coupled to the touch switch 206 by one or more electrical wires. For example, the capacitive touch trim element 204 may be from an electrically conductive material (e.g., steel, aluminum, electrically conductive plastic materials, or similar conductive metallic or non-metallic materials).

In some example embodiments, the controller 106 may set the duty cycles of the PWM signals PWM1, PWM2, PWM3 as shown in row 2 of Table 1 in response to another capacitive touch of the capacitive touch trim element 204 of the lighting device 100. For example, as shown in row 2 of Table 1, the duty cycle of the PWM signal PWM2 may be 100%, and the duty cycles of the PWM signals PWM1, PWM3 may be 0%, where the light provided by the light module 104 and thus by the lighting device 100 is the light emitted by the LED light source 112 and has the CCT value CCT2.

In some example embodiments, the controller 106 may set the duty cycles of the PWM signals PWM1, PWM2, PWM3 as shown in row 3 of Table 1 in response to another capacitive touch of the capacitive touch trim element 204 of the lighting device 100. For example, as shown in row 3 of Table 1, the duty cycle of the PWM signal PWM3 may be 100%, and the duty cycles of the PWM signals PWM1, PWM2 may be 0%, where the light provided by the light module 104 and thus by the lighting device 100 is the light emitted by the LED light source 114 and has the CCT value CCT3.

**Table 1**

| | Duty Cycle | | |
|---|---|---|---|
| | PWM1 | PWM2 | PWM3 |
| CCT1 | 100% | 0% | 0% |
| CCT2 | 0% | 100% | 0% |
| CCT3 | 0% | 0% | 100% |

In some example embodiments, the controller 106 may continuously change, in steps, the duty cycles of the PWM signals PWM1, PWM2, PWM3 to the values shown in the rows of Table 1 in response to a capacitive touch (e.g., touch and hold for a duration) that corresponds to a continuous CCT change until the capacitive touch is removed. For example, upon the detection of a capacitive corresponds to a continuous CCT change, the controller 106 may set the duty cycles of the PWM signals PWM1, PWM2, PWM3 to the values shown in row 1 of Table 1. After a wait time period (e.g., 5 seconds, 10 seconds, 15 seconds, 30 seconds, etc.), the controller 106 may set the duty cycles of the PWM signals PWM1, PWM2, PWM3 to the values shown in row 2 of Table 1 as long as the capacitive touch is still detected. After another wait time period (e.g., 5 seconds, 10 seconds, 15 seconds, 30 seconds, etc.), the controller 106 may set the duty cycles of the PWM signals PWM1, PWM2, PWM3 to the values shown in row 3 of Table 1 as long as the capacitive touch is still detected. If the capacitive touch is still detected, the controller 106 may set the duty cycles of the PWM signals PWM1, PWM2, PWM3 to the values shown in row 1 of Table 1. The controller 106 may continue changing the values of the PWM signals PWM1, PWM2, PWM3 until the capacitive touch is no longer detected.

In some example embodiments, the PWM signals PWM1, PWM2, PWM3 may each have a non-zero duty cycle without departing from the scope of this disclosure. For example, the light provided by the light module 104 may be a combination of the lights by provided by the LED light sources 110, 112, 114, and the CCT of the light provided by the light module 104 may be based on CCT1, CCT2, CCT3 and the intensities of the lights.

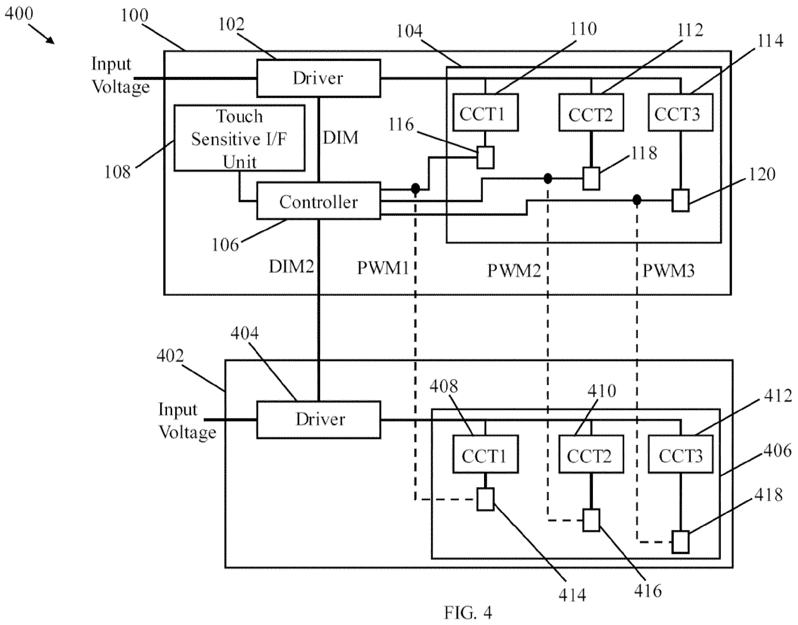

FIG. 4 illustrates a lighting system 400 including the lighting device 100 of FIG. 1 according to an example embodiment. In some example embodiments, the lighting system 400 may also include a second lighting device 402. For example, the lighting device 402 may be a recessed light fixture, a surface mounted light fixture, or another type of light fixture. Referring to FIGS. 1 and 4, the lighting device 100 includes the driver 102, the light module 104, the controller 106, and the touch sensitive interface unit 108 as described above with respect to FIG. 1. The light module 104 may include the LED light sources 110, 112, 114. The light module 104 may also include the transistors 116, 118, 120 that operate as switches to control the current amount through the LED light sources 110, 112, 114 based on the PWM signals PWM1, PWM2, PWM3 provided to the transistors 116, 118, 120, respectively, by the controller 106. The controller 106 may control the total current provided to the light module 104 by the driver 102 using the using the dim level control signal DIM. As described above with respect to the lighting device 100, because the intensities of individual the lights provided by the LED light sources 110, 112, 114 depend on the duty cycles of the PWM signals PWM1, PWM2, PWM3, the CCT of the light provided by the light module 104 and thus the lighting device 100 may also depend on the duty cycles of the PWM signals PWM1, PWM2, PWM3.

In some example embodiments, the lighting device 402 may include a driver 404 and a light module 406. For example, the driver 404 may receive the AC power via the Input Voltage connection of the lighting device 402 and provide power to the light module 406 based on the dim level control signal DIM2 provided by the controller 106 of the lighting device 100. For example, an electrical wire may extend between and connect the lighting device 100 to the lighting device 402. The dim level control signal DIM2 may be the same as the dim level control signal DIM provided to the driver 102 of the lighting device 100.

In some example embodiments, the light module 406 may include LED light sources 408, 410, 412. The light provided by the lighting device 402 may be one of or a combination of the lights provided by the LED light sources 408, 410, 412. To illustrate, the light module 406 may include the transistors 414, 416, 418 that operate as switches to control the current amount through the LED light sources 408, 410, 412 based on the PWM signals PWM1, PWM2, PWM3 that are also provided to the transistors 116, 118, 120. For example, multiple electrical wires that extend between the lighting device 100 to the lighting device 402 may carry the PWM signals PWM1, PWM2, PWM3. The controller 106 may provide the PWM signals PWM1, PWM2, PWM3 to the transistors 116, 118, 120 of the lighting device 100 as well as to the transistors 414, 416, 418 of the lighting device 402 to control the CCT of the lights provided by the lighting devices 100 and 402 in unison.

For example, the LED light source 408 of the light module 406 may emit a light having the CCT value CCT1, which is the CCT of the light provided by the LED light source 110 of the light module 104. The LED light source 410 of the light module 406 may emit a light having the CCT value CCT2, which is the CCT of the light provided by the LED light source 112 of the light module 104. The LED light source 412 of the light module 406 may emit a light having the CCT value CCT3, which is the CCT of the light provided by the LED light source 114 of the light module 104. As described above, CCT1 may be a warm CCT, CC3 may be a cool CCT, and CCT2 may be between CCT1 and CCT3.

Referring to FIGS. 1-4, as described above, the controller 106 may control/adjust the CCT of the light provided by the lighting device 100 based on capacitive touches of the capacitive touch trim element 204 (shown in FIG. 2). By using the PWM signals PWM1, PWM2, PWM3 to control/adjust the intensities of the lights provided by the LED light sources 110, 112, 114, respectively, as well as the intensities of the lights provided by the LED light sources 110, 112, 114, respectively, the controller 106 may control/adjust the CCT of light provided by the lighting device 100 in unison with the CCT of the light provided by the lighting device 402. In some example embodiments, the controller 106 may control the brightness level as well as the CCT of the lights provided by the lighting devices 100, 402 in unison based on one or more capacitive touches in the manner described above with respect to the lighting device 100.

In some alternative embodiments, the lighting system 400 may include more than two lighting devices without departing from the scope of this disclosure. In some alternative embodiments, the light module 104 and the light module 406 may each include more or fewer LED light sources than shown without departing from the scope of this disclosure. In some alternative embodiments, the light module 104 and the light module 406 may include one or more other types of light sources instead of or in addition to LED light sources without departing from the scope of this disclosure. In some alternative embodiments, lighting device 402 may include other components than shown without departing from the scope of this disclosure.

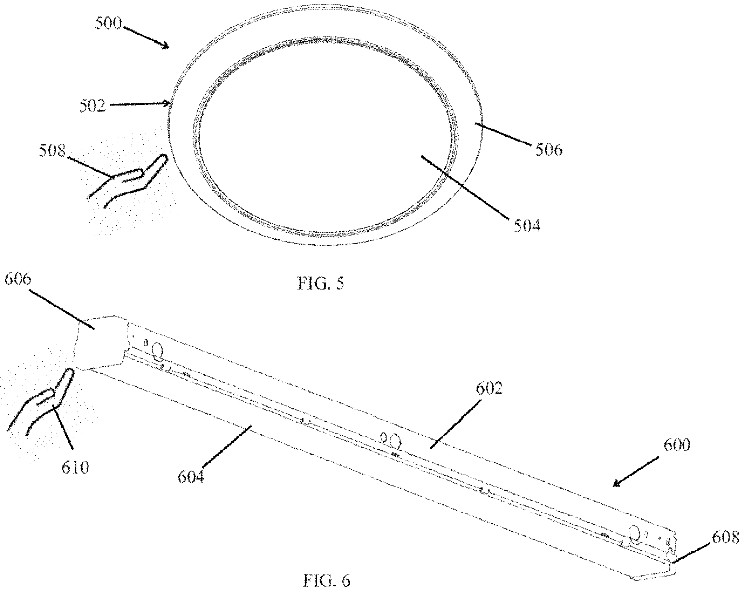

FIG. 5 illustrates a light fixture 500 corresponding to the lighting device 100 of FIG. 1 according to an example embodiment. For example, the light fixture 500 may be a recessed light fixture or a surface mount light fixture that may be recessed in or mounted to a wall or a ceiling. Referring to FIGS. 1-5, in some example embodiments, the light fixture 500 includes a housing 502 and a light module 504. The housing 502 may include a capacitive touch trim element 506. For example, the capacitive touch trim element 506 may be a trim ring of a trim of the light fixture 500 (e.g., a trim attached to the housing 502) or an integrally formed trim ring of the housing 502 (e.g., a flange or a base of the housing 502). The capacitive touch trim element 506 may correspond to the capacitive touch trim element 204 shown in FIG. 2. The capacitive touch trim element 506 is exposed to view from below the light fixture 500 after the light fixture 500 is installed. In general, after the light fixture 500 is installed, for example, recessed in a wall or a ceiling or mounted to a wall or a ceiling, the capacitive touch trim element 506 is accessible to a user (e.g., a technician, a homeowner, etc.) without uninstalling the light fixture 500 and without removing a component of the light fixture 500. The capacitive touch trim element 506 of the housing 502 may be connected to the controller 106 or to the touch switch 206 such that the controller 106 or the touch switch 206 (shown in FIG. 2) can detect touches, for example, of the capacitive touch trim element 506 by a hand 508 of a person.

In some alternative embodiments, the light fixture 500 may have a different shape than shown without departing from the scope of this disclosure. For example, the capacitive touch trim element 506 of the housing 502 may have a rectangular or another non-round shape. In some alternative embodiments, the controller 106 may detect capacitive touches of the capacitive touch trim element 506 by an item other than the hand 508 without departing from the scope of this disclosure.

FIG. 6 illustrates a light fixture 600 corresponding to the lighting device 100 of FIG. 1 according to another example embodiment. For example, the light fixture 600 may be a linear/elongated light fixture that may be suspended from or mounted to a ceiling. Referring to FIGS. 1-4 and 6, in some example embodiments, the light fixture 600 includes a housing 602 and a light module 604. The housing 602 may include end caps 606, 608 that may serve as capacitive touch trim elements. For example, the end caps 606, 608 may each correspond to the capacitive touch trim element 204 shown in FIG. 2. In general, the end caps 606, 608 are accessible for touching by a user (e.g., a technician, a homeowner, etc.) after the light fixture 600 installed without uninstalling the light fixture 600 and without removing a component of the light fixture 600. The end caps 606, 608 of the housing 602 may be connected to the controller 106 or to the touch switch 206 such that the controller 106 or the touch switch 206 (shown in FIG. 2) can detect touches, for example, of either one of the end caps 606, 608 by a hand 610 of a person.

In some alternative embodiments, the light fixture 602 may have a different shape than shown without departing from the scope of this disclosure. In some alternative embodiments, the controller 106 may detect capacitive touches of the end caps 606, 608 by an item other than the hand 610 without departing from the scope of this disclosure.

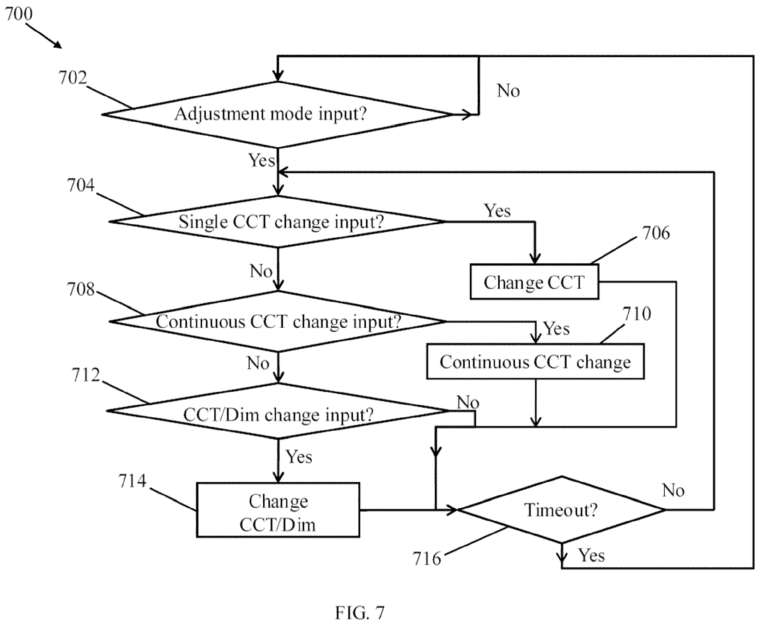

FIG. 7 illustrates a method 700 of controlling the CCT of the light provided by the lighting device 100 of FIG. 1 according to an example embodiment. Referring to FIGS. 1-7, in some example embodiments, at step 702, the method 700 includes determining (e.g., by the controller 106) whether one or more capacitive touches of a capacitive touch trim element 204 correspond to an adjustment mode input. If the one or more capacitive touches do not correspond to the adjustment mode input, the method 700 loops at the step 702 until one or more capacitive touches of the capacitive touch trim element 204 correspond to the adjustment mode input. For example, a capacitive touch of the capacitive touch trim element (e.g., the capacitive touch trim element 506 of the light fixture 500) for 2 seconds may correspond to the adjustment mode input.

If the one or more capacitive touches correspond to the adjustment mode input, the method 700 continues with step 704 where the controller 106 enters an adjustment mode and checks whether subsequent one or more capacitive touches correspond to a single CCT change input. Upon entering the adjustment mode, the controller 106 may change the brightness level of the light to default lumens (e.g., 50 lumens or 1000 lumens). After entering the adjustment mode, if the one or more capacitive touches correspond to a single CCT change input, the controller 106, at step 706, may change the CCT of the light provided by the lighting device 100 by adjusting one or more of the PWM signals PWM1, PWM2, PWM3. After changing the CCT of the light provided by the lighting device 100, the controller 106 may check for further one or more capacitive touches that correspond to a single CCT change input unless a timeout period (e.g., 30 seconds, 1 minute, etc.) elapses, as checked at step 716, after the last one or more capacitive touches. If the timeout period elapses as determined at step 716, the method 700 continues with step 702.

At step 704, if the one or more capacitive touches do not correspond to a single CCT change input, the controller 106 checks, at step 708, whether one or more capacitive touches correspond to a continuous CCT change input. If the one or more capacitive touches correspond to a continuous CCT change input, the controller 106, at step 710, may continuously change, in steps, the CCT of the light provided by the lighting device 100 by adjusting one or more of the PWM signals PWM1, PWM2, PWM3. For example, while in the adjustment mode, a capacitive touch for longer than 2 seconds may correspond to the continuous CCT change input, and the controller 106 may continuously change the CCT of the light provided by the lighting device 100 after a wait time interval as long as the capacitive touch is not terminated. Alternatively, the continuous CCT change may be terminated upon a capacitive touch input that corresponds to a continuous touch termination. After step 710, the method 700 may continue with step 704 unless the timeout period elapses, as checked at step 716, after the last one or more capacitive touches. If the timeout period elapses as determined at step 716, the method 700 continues with step 702.

At step 708, if the one or more capacitive touches do not correspond to a continuous CCT change input, the controller 106 checks, at step 712, whether one or more capacitive touches correspond to a combined CCT/Dim change input. If the one or more capacitive touches correspond to a combined CCT/Dim change input, the controller 106, at step 714, may change the CCT of the light provided by the lighting device 100 by adjusting one or more of the PWM signals PWM1, PWM2, PWM3, and may change brightness level of the light by adjusting the dim control signal DIM provided to the driver 102. For example, while in the adjustment mode, two capacitive touches for within 1 second may correspond to the combined CCT/Dim change input, and in response to such input, the controller 106 may change the CCT and brightness level of the light provided by the lighting device 100. After step 714, the method 700 may continue with step 704 unless the timeout period elapses, as checked at step 716, after the last one or more capacitive touches. If the timeout period elapses as determined at step 716, the method 700 continues with step 702.

In some example embodiments, the method 700 is applicable with respect to the lighting device 100 and the lighting device 402 as parts of the lighting system 400 without departing from the scope of this disclosure. In some alternative embodiments, the method 700 may be performed in a different order than described without departing from the scope of this disclosure. In some alternative embodiments, the method 700 may include more or fewer steps than described without departing from the scope of this disclosure. Other capacitive touches and touch patterns (e.g., multiple quick taps, or sliding a finger around a portion or all of the perimeter of the trim, swiping one finger or multiple fingers at the same time, or similar and distinguishable patterns that are detectable and/or distinguishable by the controller) instead of or in addition to those described above may correspond to user inputs for changing the CCT of the light provided by the lighting device 100.

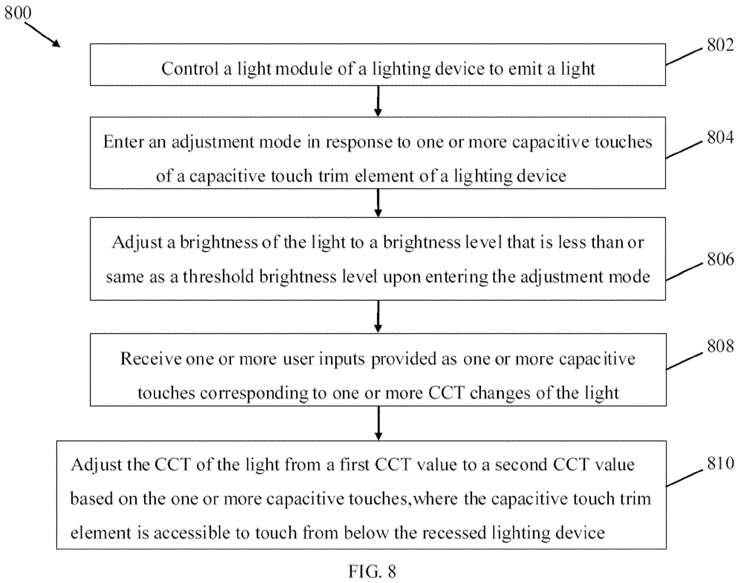

FIG. 8 illustrates a method 800 of controlling the CCT and the brightness level of the light provided by the lighting device 100 of FIG. 1 according to an example embodiment. Referring to FIGS. 1-8, in some example embodiments, at step 802, the method 800 includes controlling, by the controller 106 of the lighting device 100, the light module 104 of the lighting device 100 to emit a light. For example, the controller 106 may control the driver 102 of the lighting device 100 to provide a current to the light module 104. The controller 106 may also set/adjust to duty cycles of the PWM signals PWM1, PWM2, PMW3, for example, based on default values or existing configurations to control the CCT of the light.

In some example embodiments, at step 804, the method 800 may include entering, by the controller 106, an adjustment mode in response to one or more capacitive touches of the capacitive touch trim element 204. For example, the capacitive touch trim element 204 may correspond to the capacitive touch trim element 506 of the housing 502 of the light fixture 500. A capacitive touch that corresponds to a user input requesting an adjustment mode entry may be a touch using a finger or another item in the capacitive touch trim element 204 that is maintained for a threshold time period (e.g., 2 seconds). The controller 106 may enter the adjustment mode, for example, upon the removal of the touch.

In some example embodiments, at step 806, the controller 106 may adjust a brightness of the light to a brightness level that is less than or same as a threshold brightness level (e.g., 50 lumens, 100 lumens, or 1000 lumens) upon entering the adjustment mode. For example, the controller 106 may adjust the brightness level of the light using the dim level control signal DIM (e.g., a 0-10v signal) that is provided to the driver 102 and controls the amount of current the driver 102 provides to the light module 104. Adjusting the brightness level to be the same or less than the threshold level may reduce the glare on a user that may be providing the capacitive touches to change the CCT of the light as the user assess the CCT.

In some example embodiments, at step 808, the method 800 may include receiving, by the controller 106, one or more user inputs as one or more capacitive touches corresponding to one or more CCT changes of the light. For example, the one or more capacitive touches may be provided to the lighting device 100 by touching the capacitive touch trim element 204 of the lighting device 100. At step 810, the method 800 may include adjusting, by the controller 106, the CCT of the light based on the one or more capacitive touches, where the capacitive touch trim element faces a space illuminated by the light when/after the lighting device 100 is installed. The controller 106 may make a single CCT change or multiple CCT changes in steps depending on the particular one or more capacitive touches as described above.

In some example embodiments, the method 800 may also include performing combined CCT and brightness level changes if depending on the particular one or more capacitive touches as described above. The method 800 may also include exiting the adjustment mode if no capacitive touches are detected within a threshold time period (e.g., 30 seconds, 1 minute, etc.). As described with respect to FIG. 4, the controller 106 may also change the CCT and brightness level of the light provided by the lighting device 402 based on the capacitive touches of the capacitive touch trim element 204.

In some alternative embodiments, the method 800 may be performed in a different order than described without departing from the scope of this disclosure. In some alternative embodiments, the method 800 may include more or fewer steps than described without departing from the scope of this disclosure. For example, in some example embodiments, step 804 and step 806 may be omitted without departing from the scope of this disclosure.

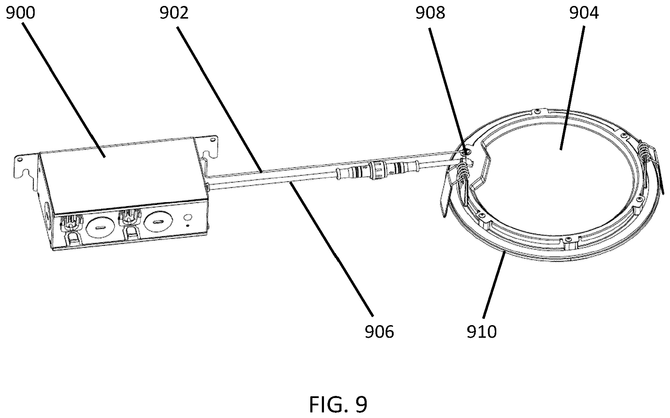

FIG. 9 illustrates a lighting device 904 according to another example embodiment with a remotely located controller and driver. As shown in FIG. 9, a junction box 900 is remotely located to a lighting device with at least one power wire(s) 906 connected to and extending from the driver housed by the junction box 900 and one or more electrical wire(s) 902 connected between the controller (and/or a touch switch, as described above, either separate from or part of the controller) and the lighting device 904 housing. The capacitive touch trim element 910, through electrical and/or mechanical contact with (or in some embodiments being integral to) the housing of the lighting device 904 may be connected to the controller or to the touch switch such that the controller or the touch switch 206 (not shown) can detect touches, for example, of the capacitive touch trim element 910 by a hand of a person. In some example embodiments of the invention, the capacitive touch trim element 910 may correspond to the capacitive touch trim element shown in FIG. 2. In the example of Fig. 9, the electric wire 902 is connected to the housing of the lighting device 904. The trim element 910 containing or acting as the touch interface is either integral to, or as shown in the embodiment of Fig. 9, electrically (and/or mechanically) connected to the housing via one or more connectors 908 (e.g., screws or similar electrically conductive fasteners) such the electric wire 902 can deliver a signal indicating the capacitance changes when a user touches the trim element 910 after the lighting device 904 has been installed in a ceiling. In some example embodiments, the controller may instruct the driver to adjust one or more PWM signals to the light source of the lighting device 904 to control the CCT (or intensity) of the light provided by the lighting device 904 based on the signal(s) received from the electrical wire 902. In alternative embodiments to Fig. 9, the electrical wire 902 may be included or bundled with the power wire(s) 906, and/or the electrical wire 902 may be connected via an electrically conductive, removable connector or permanently soldered or otherwise electrically connected directly to the trim element 910 portion of the lighting device 904.

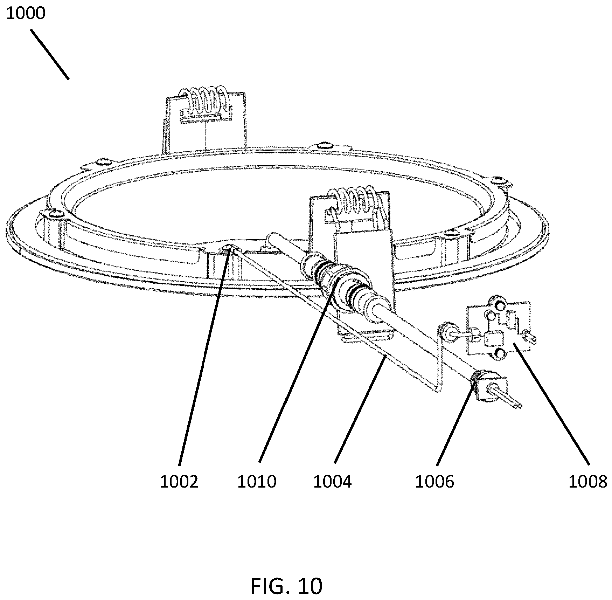

FIG. 10 illustrates a second view of the example embodiment of FIG. 9. As shown in FIG. 10, the electrical wire 1004 for delivering signals indicating a change in the capacitance of the housing (including the trim element) of the light fixture 1000 is connected by a connector 1002 (removable like a screw or permanently connected like a rivet) mechanically and electrically connecting the wire 1004 to the light fixture 1000 and to the controller 1008. Also shown in FIG. 10, is the power wire(s) 1006 connecting the light sources of the light fixture 1000 to the remotely located driver (not shown) via a cable connector 1010 connecting two power wire segments - one segment electrically connected to the light source of the light fixture and the other segment connected to the driver (not shown). In the example lighting device shown in FIGs. 10, the functions of the touch switch and the controller may be integrated into a single device (controller 1008) without departing from the scope of this disclosure. In some alternative embodiments, separate power units (drivers) may provide power to the different components of the lighting device without departing from the scope of this disclosure. In some alternative embodiments, the power wire 1006 and the electrical wire 1004 for could be co-located in the same insulating tube or conduit between the light fixture 1000 and the remotely located driver(s) or controller 1008. In some other alternative embodiments, the controller 1008 (or the touch switch) could be incorporated into a mechanical and electrical connector between the light fixture and remotely located driver(s) and/or controller, or in yet other alternative embodiments, the controller 1008 (and/or the touch switch functionality) may be incorporated into the remotely located driver and located in the same casing, housing, or junction box as the driver circuitry.

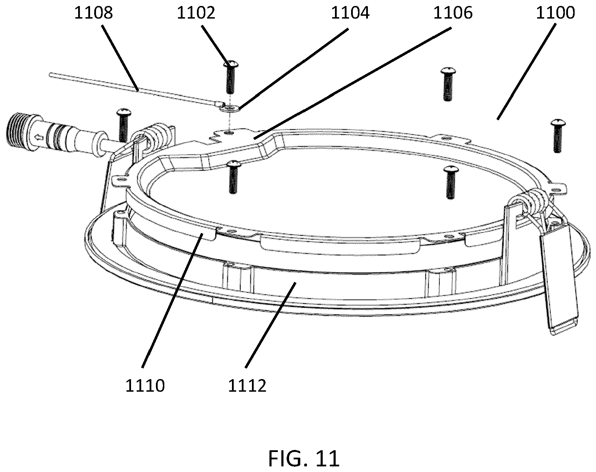

FIG. 11 illustrates an exploded view of the lighting device 1100 according to the example embodiment of FIG. 9. As shown in FIG. 11, the electrical wire 1108 connected to the controller and/or touch switch (not shown) at one end and the light fixture housing 1106 by a wire terminal 1104 and screw 1102 mechanically and electrically coupling the wire terminal 1104 to the light fixture housing 1106. While the wire terminal 1104 and screw 1102 provide the mechanical and electrical connection of the wire 1108 and housing 1106 in the example embodiment of FIG. 11, other alternative embodiments can use other mechanical and/or electrical connectors to connect the wire 1108 to the housing 1106 (e.g., clips, rivets, solder connections, plug and play connectors, or similar mechanical and/or electrical connectors).

As shown in FIG. 11, the light fixture housing 1106 is in multiple pieces (e.g., a back portion 1110 and a trim portion 1112) that are mechanically and electrically coupled to each other. In the embodiment shown in FIG. 11, the screw 1102 not only mechanically and electrically connects the wire terminal 1104 of the wire 1108 to the housing but also mechanically connects the back portion 1110 and the trim portion 1112 such that attachment of the wire 1108 to the housing 1106 and being electrically coupled to the trim portion 1112 does not require additional or dedicated hardware in the example embodiment of Fig. 11. In some alternative embodiments, the trim portion 1112 can be integral to the housing 1106 as all one-piece. The trim portion 1112 may include a capacitive touch trim surface exposed below the ceiling after the light fixture 1100 is installed in a ceiling. For example, the capacitive touch trim element may be a trim ring of a trim of the light fixture 1100 (e.g., a trim attached to the housing 1106) or an integrally formed trim ring of the housing 1106 exposed below a ceiling after install of the light fixture 1100 in the ceiling).

In some alternative embodiments, similar to that shown in FIG. 11, the trim portion 1112 (or a subcomponent of the trim portion 1112) may be a plastic or other nonconductive material, where the sensitivity of the controller (or touch switch) is such that an item or hand touching a surface of the plastic trim portion 1112 would be proximate enough (and/or the plastic thickness thin enough) to sense a capacitance change due to the proximate location of the item or hand (touching or proximate to the plastic trim portion 1112) to the conductive back potion 1110 of the housing 1112.

In other alternative embodiments, similar to those shown in FIGs 9-11, where the electrical wire connecting the controller to the light fixture is connected to the housing, other event detection using the detectability of the controller to detect a change in capacitance of the housing is possible. For example, instead of having the controller entering an adjustment mode or changing the CCT, color, or intensity of the light from the light fixture, the capacitance change detection may indicate something is touching the fixture housing above the ceiling longer than a set time period that may indicate something is touching the fixture that should not. For example, a water drip or leak above the ceiling, animals or insect nests, fire or shock hazards, or other undesirable physical engagement with the light fixture housing occurring above the ceiling that cannot be seen from below the ceiling or occurring on the trim of the fixture from the room side of the ceiling. In such an embodiment, the controller (and/or driver) may instead of changing the CCT or intensity setting of the fixture may flash or strobe the lights or provide another visual indication using the light from the light fixture and/or send a signal or message to a remote device indicating the prolonged capacitance change detection to allow for someone to inspect the light fixture and/or ceiling plenum.

## Claims

1. A recessed lighting device (100, 500), comprising:
a light module (104) configured to emit a light;
a capacitive touch trim element (204, 502) ; and
a controller (106) configured to change a correlated color temperature (CCT) of the light from a first CCT value (CCT1) to a second CCT value (CCT2) based on one or more capacitive touches of the capacitive touch trim element (204, 506) by a user, wherein, after the recessed lighting device is installed in a ceiling, the capacitive touch trim element is exposed to view and accessible to touch from below the ceiling , wherein the one or more capacitive touches is detectable along a surface of capacitive touch trim element from below the ceiling after install without removing a component of the lighting device.

2. The recessed lighting device of Claim 1, wherein the controller (106) is configured to enter an adjustment mode in response to one or more capacitive touches of the capacitive touch trim element (204, 506) lasting longer than a time duration and wherein the controller is configured to adjust the CCT of the light after entering the adjustment mode, wherein the controller does not adjust the CCT of the light in response to one or more capacitive touches received prior to entering the adjustment mode.

3. The recessed lighting device of Claim 1, wherein the controller (106) is configured to enter an adjustment mode in response to a sequence of capacitive touches of the capacitive touch trim element (204, 506) being detected by the controller, and wherein the controller is configured to adjust the CCT of the light after entering the adjustment mode; wherein the controller does not adjust the CCT of the light in response to one or more capacitive touches received prior to entering the adjustment mode.

4. The recessed lighting device of Claim 1, wherein the capacitive touch trim element (204, 502) includes a nonconductive portion.

5. The recessed lighting device of Claim 1, wherein the capacitive touch trim element (204, 502) includes the housing of the light module.

6. The recessed lighting device of Claim 2, wherein the controller (106) is configured to adjust the CCT of the light to a default value upon entering the adjustment mode and before adjusting the CCT of the light based on one or more subsequent capacitive touches of the capacitive touch trim element (204, 506).

7. The recessed lighting device of Claim 2, wherein the controller (106) is configured to adjust, upon entering the adjustment mode, a brightness of the light to a brightness level that is less than or same as a threshold brightness level.

8. The recessed lighting device of Claim 2, wherein the controller (106) is configured to change the CCT of the light from the first CCT value (CCT1) to the second CCT value (CCT2) upon a capacitive touch of the capacitive touch trim element (204, 506) and wherein a duration of the capacitive touch is less than a threshold time period.

9. The recessed lighting device of Claim 2, wherein the controller (106) is remotely located from the light module and capacitive touch trim element (204, 502).

10. The recessed lighting device of Claim 9, wherein the controller is connected to the housing via at least one wire (902), wherein when a person touches the capacitive touch trim element (204, 502), a signal is detectable from the capacitive touch trim element to the housing and sent via the at least one wire to the controller, wherein the controller interprets the signal to either enter an adjustment mode or cause an adjustment to the CCT of the light emitted by the recessed lighting device.

11. The recessed lighting device of Claim 9, wherein the controller (106) is included as part of a driver of the recessed lighting device.

12. A method (800) of controlling a correlated color temperature (CCT) of a light emitted by a recessed lighting device (100, 500), the method comprising:
controlling (802), by a controller (106), a light module (104) of the recessed lighting device to emit the light;
receiving (808), by the controller (106), one or more user inputs provided as one or more capacitive touches of a capacitive touch trim element (204, 506); and
adjusting (810), by the controller (106), the CCT of the light from a first CCT value (CCT1) to a second CCT value (CCT2) based on the one or more capacitive touches, wherein, after the recessed lighting device is installed in a ceiling, the capacitive touch trim element (204, 506) is exposed to view and accessible to touch from below the ceiling, wherein the one or more capacitive touches is detectable along a surface the capacitive touch trim element from below the ceiling after install without removing a component of the lighting device.

13. The method of Claim 12, further comprising entering (804), by the controller (106), an adjustment mode in response to second one or more capacitive touches of the capacitive touch trim element (204, 506) before adjusting the CCT of the light based on the one or more capacitive touches.

14. The method of Claim 13, further comprising adjusting, upon entering the adjustment mode, a brightness of the light to a brightness level that is less than or same as a threshold brightness level to reduce a glare of the light during an assessment of the CCT of the light.

15. The method of Claim 12, further comprising entering, by the controller (106), a status mode in response to a second one or more capacitive touches of the capacitive touch trim element (204, 506), wherein the controller causes the light emitted by the lighting device to indicate the status of a battery electrically connected to the lighting device.

## Patentansprüche

1. Einbaubeleuchtungsvorrichtung (100, 500), umfassend:
ein Lichtmodul (104), das konfiguriert ist, um Licht zu emittieren;
ein kapazitives Berührungsblendenelement (204, 502); und
eine Steuerung (106), die konfiguriert ist, um eine korrelierte Farbtemperatur (CCT) des Lichts basierend auf einer oder mehreren kapazitiven Berührungen des kapazitiven Berührungsblendenelements (204, 506) durch einen Benutzer von einem ersten CCT-Wert (CCT1) auf einen zweiten CCT-Wert (CCT2) zu ändern, wobei, nachdem die Einbaubeleuchtungsvorrichtung in einer Decke installiert wurde, das kapazitive Berührungsblendenelement sichtbar und von unterhalb der Decke für eine Berührung zugänglich ist, wobei die eine oder mehreren kapazitiven Berührungen entlang einer Oberfläche des kapazitiven Berührungsblendenelements von unterhalb der Decke nach der Installation ohne Entfernen einer Komponente der Beleuchtungsvorrichtung detektierbar sind.

2. Einbaubeleuchtungsvorrichtung nach Anspruch 1, wobei die Steuerung (106) konfiguriert ist, um als Reaktion auf eine oder mehrere kapazitive Berührungen des kapazitiven Berührungsblendenelements (204, 506), die länger als eine Zeitdauer andauern, in einen Anpassungsmodus einzutreten, und wobei die Steuerung konfiguriert ist, um die CCT des Lichts nach dem Eintreten in den Anpassungsmodus anzupassen, wobei die Steuerung die CCT des Lichts als Reaktion auf eine oder mehrere kapazitive Berührungen, die vor dem Eintreten in den Anpassungsmodus empfangen werden, nicht anpasst.

3. Einbaubeleuchtungsvorrichtung nach Anspruch 1, wobei die Steuerung (106) konfiguriert ist, um als Reaktion darauf, dass eine Abfolge von kapazitiven Berührungen des kapazitiven Berührungsblendenelements (204, 506) durch die Steuerung detektiert wird, in einen Anpassungsmodus einzutreten, und wobei die Steuerung konfiguriert ist, um die CCT des Lichts nach dem Eintreten in den Anpassungsmodus anzupassen; wobei die Steuerung die CCT des Lichts als Reaktion auf eine oder mehrere kapazitive Berührungen, die vor dem Eintreten in den Anpassungsmodus empfangen werden, nicht anpasst.

4. Einbaubeleuchtungsvorrichtung nach Anspruch 1, wobei das kapazitive Berührungsblendenelement (204, 502) einen nicht leitfähigen Abschnitt einschließt.

5. Einbaubeleuchtungsvorrichtung nach Anspruch 1, wobei das kapazitive Berührungsblendenelement (204, 502) das Gehäuse des Lichtmoduls einschließt.

6. Einbaubeleuchtungsvorrichtung nach Anspruch 2, wobei die Steuerung (106) konfiguriert ist, um die CCT des Lichts beim Eintreten in den Anpassungsmodus und vor dem Anpassen der CCT des Lichts basierend auf einer oder mehreren nachfolgenden kapazitiven Berührungen des kapazitiven Berührungsblendenelements (204, 506) auf einen Standardwert anzupassen.

7. Einbaubeleuchtungsvorrichtung nach Anspruch 2, wobei die Steuerung (106) konfiguriert ist, um bei Eintreten in den Anpassungsmodus eine Helligkeit des Lichts auf ein Helligkeitsniveau anzupassen, das kleiner als oder gleich einem Schwellenwerthelligkeitsniveau ist.

8. Einbaubeleuchtungsvorrichtung nach Anspruch 2, wobei die Steuerung (106) konfiguriert ist, um die CCT des Lichts bei einer kapazitiven Berührung des kapazitiven Berührungsblendenelements (204, 506) von dem ersten CCT-Wert (CCT1) auf den zweiten CCT-Wert (CCT2) zu ändern, und wobei eine Dauer der kapazitiven Berührung kleiner als eine Schwellenwertzeitspanne ist.

9. Einbaubeleuchtungsvorrichtung nach Anspruch 2, wobei die Steuerung (106) entfernt von dem Lichtmodul und dem kapazitiven Berührungsblendenelement (204, 502) angeordnet ist.

10. Einbaubeleuchtungsvorrichtung nach Anspruch 9, wobei die Steuerung über mindestens einen Draht (902) mit dem Gehäuse verbunden ist, wobei, wenn eine Person das kapazitive Berührungsblendenelement (204, 502) berührt, ein Signal von dem kapazitiven Berührungsblendenelement zu dem Gehäuse detektierbar ist und über den mindestens einen Draht an die Steuerung gesendet wird, wobei die Steuerung das Signal interpretiert, um entweder in einen Anpassungsmodus einzutreten oder eine Anpassung der CCT des von der Einbaubeleuchtungsvorrichtung emittierten Lichts zu bewirken.

11. Einbaubeleuchtungsvorrichtung nach Anspruch 9, wobei die Steuerung (106) als Teil eines Treibers der Einbaubeleuchtungsvorrichtung eingeschlossen ist.

12. Verfahren (800) zum Steuern einer korrelierten Farbtemperatur (CCT) eines von einer Einbaubeleuchtungsvorrichtung (100, 500) emittierten Lichts, wobei das Verfahren umfasst:
Steuern (802), durch eine Steuerung (106), eines Lichtmoduls (104) der Einbaubeleuchtungsvorrichtung zum Emittieren des Lichts;
Empfangen (808), durch die Steuerung (106), einer oder mehrerer Benutzereingaben, die als eine oder mehrere kapazitive Berührungen eines kapazitiven Berührungsblendenelements (204, 506) bereitgestellt sind; und
Anpassen (810), durch die Steuerung (106), der CCT des Lichts von einem ersten CCT-Wert (CCT1) auf einen zweiten CCT-Wert (CCT2) basierend auf der einen oder den mehreren kapazitiven Berührungen, wobei, nachdem die Einbaubeleuchtungsvorrichtung in einer Decke installiert wurde, das kapazitive Berührungsblendenelement (204, 506) sichtbar und von unterhalb der Decke für eine Berührung zugänglich ist, wobei die eine oder mehreren kapazitiven Berührungen entlang einer Oberfläche des kapazitiven Berührungsblendenelements von unterhalb der Decke nach der Installation ohne Entfernen einer Komponente der Beleuchtungsvorrichtung detektierbar sind.

13. Verfahren nach Anspruch 12, ferner umfassend das Eintreten (804) in einen Anpassungsmodus durch die Steuerung (106) als Reaktion auf zweite eine oder mehrere kapazitive Berührungen des kapazitiven Berührungsblendenelements (204, 506) vor dem Anpassen der CCT des Lichts basierend auf der einen oder den mehreren kapazitiven Berührungen.

14. Verfahren nach Anspruch 13, ferner umfassend das Anpassen einer Helligkeit des Lichts bei Eintreten in den Anpassungsmodus auf ein Helligkeitsniveau, das kleiner als oder gleich einem Schwellenwerthelligkeitsniveau ist, um einen Blendeffekt durch das Licht während einer Beurteilung der CCT des Lichts zu reduzieren.

15. Verfahren nach Anspruch 12, ferner umfassend das Eintreten in einen Statusmodus durch die Steuerung (106) als Reaktion auf eine zweite eine oder mehrere kapazitive Berührungen des kapazitiven Berührungsblendenelements (204, 506), wobei die Steuerung bewirkt, dass das von der Beleuchtungsvorrichtung emittierte Licht den Status einer elektrisch mit der Beleuchtungsvorrichtung verbundenen Batterie anzeigt.

## Revendications

1. Dispositif d'éclairage encastré (100, 500), comprenant :
un module de lumière (104) configuré pour émettre une lumière ;
un élément de garniture tactile capacitif (204, 502) ; et
un dispositif de commande (106) configuré pour changer une température de couleur corrélée (CCT) de la lumière d'une première valeur CCT (CCT1) à une seconde valeur CCT (CCT2) sur la base d'un ou plusieurs contacts tactiles capacitifs de l'élément de garniture tactile capacitif (204, 506) par un utilisateur, dans lequel, après que le dispositif d'éclairage encastré est installé dans un plafond, l'élément de garniture tactile est exposé à la vue et accessible au toucher depuis le dessous du plafond, dans lequel le ou les contacts tactiles capacitifs sont détectables le long d'une surface de l'élément de garniture tactile capacitif depuis le dessous du plafond après installation, sans avoir à retirer un composant du dispositif d'éclairage.

2. Dispositif d'éclairage encastré selon la revendication 1, dans lequel le dispositif de commande (106) est configuré pour entrer dans un mode d'ajustement en réponse au fait qu'un ou plusieurs contacts tactiles capacitifs de l'élément de garniture tactile capacitif (204, 506) durent plus longtemps qu'une durée et dans lequel le dispositif de commande est configuré pour ajuster la CCT de la lumière après l'entrée dans le mode d'ajustement, dans lequel le dispositif de commande n'ajuste pas la CCT de la lumière en réponse à un ou plusieurs contacts tactiles capacitifs reçus avant l'entrée dans le mode d'ajustement.

3. Dispositif d'éclairage encastré selon la revendication 1, dans lequel le dispositif de commande (106) est configuré pour entrer dans un mode d'ajustement en réponse à une séquence de contacts tactiles capacitifs de l'élément de garniture tactile capacitif (204, 506) détectée par le dispositif de commande, et dans lequel le dispositif de commande est configuré pour ajuster la CCT de la lumière après être entré dans le mode d'ajustement ; dans lequel le dispositif de commande n'ajuste pas la CCT de la lumière en réponse à un ou plusieurs contacts tactiles capacitifs reçus avant l'entrée dans le mode d'ajustement.

4. Dispositif d'éclairage encastré selon la revendication 1, dans lequel l'élément de garniture tactile capacitif (204, 502) comporte une partie non conductrice.

5. Dispositif d'éclairage encastré selon la revendication 1, dans lequel l'élément de garniture tactile capacitif (204, 502) comporte le boîtier du module de lumière.

6. Dispositif d'éclairage encastré selon la revendication 2, dans lequel le dispositif de commande (106) est configuré pour ajuster la CCT de la lumière à une valeur par défaut lors de l'entrée dans le mode d'ajustement et avant l'ajustement de la CCT de la lumière sur la base d'un ou plusieurs contacts tactiles capacitifs subséquents de l'élément de garniture tactile capacitif (204, 506).

7. Dispositif d'éclairage encastré selon la revendication 2, dans lequel le dispositif de commande (106) est configuré pour ajuster, lors de l'entrée dans le mode d'ajustement, une luminosité de la lumière à un niveau de luminosité qui est inférieur ou identique à un niveau de luminosité seuil.

8. Dispositif d'éclairage encastré selon la revendication 2, dans lequel le dispositif de commande (106) est configuré pour changer la CCT de la lumière de la première valeur CCT (CCT1) à la seconde valeur CCT (CCT2) lors d'un contact tactile capacitif de l'élément de garniture tactile capacitif (204, 506) et dans lequel une durée du contact tactile capacitif est inférieure à une période de temps seuil.

9. Dispositif d'éclairage encastré selon la revendication 2, dans lequel le dispositif de commande (106) est situé à distance du module de lumière et de l'élément de garniture tactile capacitif (204, 502).

10. Dispositif d'éclairage encastré selon la revendication 9, dans lequel le dispositif de commande est relié au boîtier par l'intermédiaire d'au moins un fil (902), dans lequel lorsqu'une personne touche l'élément de garniture tactile capacitif (204, 502), un signal est détectable à partir de l'élément de garniture tactile capacitif sur le boîtier et envoyé par l'intermédiaire d'au moins un fil au dispositif de commande, dans lequel le dispositif de commande interprète le signal soit pour entrer dans un mode d'ajustement, soit pour provoquer un ajustement à la CCT de la lumière émise par le dispositif d'éclairage encastré.

11. Dispositif d'éclairage encastré selon la revendication 9, dans lequel le dispositif de commande (106) est inclus en tant que partie d'un circuit de pilotage du dispositif d'éclairage encastré.

12. Procédé (800) de commande d'une température de couleur corrélée (CCT) d'une lumière émise par un dispositif d'éclairage encastré (100, 500), le procédé comprenant :
la commande (802), par un dispositif de commande (106), d'un module de lumière (104) du dispositif d'éclairage encastré pour émettre la lumière ;
la réception (808), par le dispositif de commande (106), d'une ou plusieurs entrées d'utilisateur fournies sous la forme d'un ou plusieurs contacts tactiles capacitifs d'un élément de garniture tactile capacitif (204, 506) ; et
l'ajustement (810), par le dispositif de commande (106), de la CCT de la lumière d'une première valeur CCT (CCT1) à une seconde valeur CCT (CCT2) sur la base du ou des contacts tactiles capacitifs, dans lequel, après que le dispositif d'éclairage encastré est installé dans un plafond, l'élément de garniture tactile capacitif (204, 506) est exposé à la vue et accessible au toucher depuis le dessous du plafond, dans lequel le ou les contacts tactiles capacitifs sont détectables le long d'une surface de l'élément de garniture tactile capacitif depuis le dessous du plafond après installation, sans avoir à retirer un composant du dispositif d'éclairage.

13. Procédé selon la revendication 12, comprenant en outre l'entrée (804), par le dispositif de commande (106), dans un mode d'ajustement en réponse à un ou plusieurs seconds contacts tactiles capacitifs de l'élément de garniture tactile capacitif (204, 506) avant l'ajustement de la CCT de la lumière sur la base du ou des contacts tactiles capacitifs.

14. Procédé selon la revendication 13, comprenant en outre l'ajustement, lors de l'entrée dans le mode d'ajustement, d'une luminosité de la lumière à un niveau de luminosité qui est inférieur ou identique à un niveau de luminosité seuil pour réduire un éblouissement de la lumière pendant une évaluation de la CCT de la lumière.

15. Procédé selon la revendication 12, comprenant en outre l'entrée, par le dispositif de commande (106), dans un mode d'état en réponse à un ou plusieurs seconds contacts tactiles capacitifs de l'élément de garniture tactile capacitif (204, 506), dans lequel le dispositif de commande amène la lumière émise par le dispositif d'éclairage à indiquer l'état d'une batterie reliée électriquement au dispositif d'éclairage.
